(19) Europäisches Patentamt

European Patent Office

Office européen des brevets

(11) EP 4 360 941 A1

(12) **EUROPEAN PATENT APPLICATION**

(43) Date of publication:
01.05.2024  Bulletin 2024/18

(21) Application number: 23205988.1

(22) Date of filing: 26.10.2023

(51) International Patent Classification (IPC):
*B60L 53/63* (2019.01)  *B60L 53/68* (2019.01)

(52) Cooperative Patent Classification (CPC):
B60L 53/63; B60L 53/68

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.10.2022  HK 32022062744

(71) Applicant: New World Development Co., Ltd.
Central (HK)

(72) Inventors:
• AU, Ka-Leung
Central, Hong Kong (HK)
• CHAN, Chi Wai Edwin
Central, Hong Kong (HK)
• WONG, Ka Wing Kelvin
Central, Hong Kong (HK)

(74) Representative: Modiano, Gabriella Diana
Modiano & Partners (DE)
Steinsdorfstrasse, 14
80538 München (DE)

(54) **PRECISION-TIME ENERGY-BASED CONTROL ALGORITHM FOR ELECTRIC VEHICLE CHARGING**

(57)    A charging system for executing a charging process during a charging frame is provided. The charging system includes one or more electric vehicles (EV) chargers; a load management system (LMS) capable of controlling the one or more EV chargers; a network system comprising one or more wired or wireless connections for linking the one or more EV chargers to the load management system; and a precision-time energy-based control algorithm for dynamically regulating an output power of the one or more EV chargers to meet a preset charging profile. The charging frame is divided into a plurality of sections and the LMS adjusts the output power of each section for compensating an energy shortage in previous sections.

FIG. 1

EP 4 360 941 A1

**Description**

**CROSS-REFERENCE TO RELATED APPLICATIONS**

This application claims priority to the Hong Kong short-term patent application Ser. No. 32022062744.4 filed October 26, 2022, hereby incorporated herein by reference as to its entirety.

**FIELD OF THE INVENTION**

The present disclosure generally relates to electric vehicle chargers. In particular, the present disclosure relates to power systems, including power supply and load management control, the IEC 62196-2 standard, and the IEC 61851 standard.

**BACKGROUND OF THE INVENTION**

When many electric vehicle (EV) chargers are installed at a car park, the demand for power supply is huge if no diversity is taken into account. Therefore, a load management system (LMS) is usually required to regulate the system load in order to reduce the provision of power supply to the charging system, especially for some premises with limited power supply, and there is a need to install more EV chargers. When a charging fee is incurred, the common method for LMS to calculate the cost of charging service is either based on the charging time (i.e. time-based) or the charging energy (i.e. energy-based). Energy-based payment method is more straightforward, but the time-based method - a fixed amount for 1 hour of charging service, will be easier to manage for both the operator and users. However, the time-based method may have its drawback. For example, the output charging power is usually fixed, but the power absorption of EV depends on different models, so some users may complain the charging energy is less than their expectation if the output power is limited by the operator, or the operator may suffer extra electricity cost if they release more output power to the charger.

Therefore, it is more desirable to have a charging system having a precision-time energy-based control algorithm to regulate the output power of the charger within a fixed time frame, such that the EV can receive the preset energy within the time. Furthermore, other desirable features and characteristics will become apparent from the subsequent detailed description and the appended claims, taken in conjunction with the accompanying drawings and this background of the disclosure.

**SUMMARY OF THE INVENTION**

In the light of the foregoing background, it is an objective of the present disclosure to provide a charging system having a precision-time energy-based control algorithm for dynamically regulating the output power of the charger for the EVs.

In certain embodiments, a charging system for executing a charging process during a charging frame is provided. The charging system includes one or more EV chargers; a load management system (LMS) capable of controlling the one or more EV chargers; a network system comprising one or more wired or wireless connections for linking the one or more EV chargers to the load management system; and a precision-time energy-based control algorithm for dynamically regulating an output power of the one or more EV chargers to meet a preset charging profile. The charging frame is divided into a plurality of sections and the LMS is configured to adjust the output power of each section for compensating an energy shortage in previous sections.

In certain embodiments, the precision-time energy-based control algorithm comprises collecting EV chargers' data, including voltage, current, number of phases, charging time, and charging energy; and controlling the output power of the EV charger to a predetermined value at a predetermined time.

This Summary is provided to introduce a selection of concepts in a simplified form that is further described below in the Detailed Description. This Summary is not intended to identify key features or essential features of the claimed subject matter, nor is it intended to be used as an aid in determining the scope of the claimed subject matter. Other aspects and advantages of the present invention are disclosed as illustrated by the embodiments hereinafter.

**BRIEF DESCRIPTION OF THE DRAWINGS**

The appended drawings contain figures to further illustrate and clarify the above and other aspects, advantages, and features of the present disclosure. It will be appreciated that these drawings depict only certain embodiments of the present disclosure and are not intended to limit its scope. It will also be appreciated that these drawings are illustrated for simplicity and clarity and have not necessarily been depicted to scale. The present disclosure will now be described and explained with additional specificity and detail through the use of the accompanying drawings in which:

FIG. 1 is a block diagram of a charging system in accordance with some embodiments of the present invention;

FIG. 2 is a graph diagram illustrating a basic charging energy control algorithm in accordance with some embodiments of the present invention;

FIG. 3 is a graph diagram illustrating a preset charging profile in accordance with some embodiments of the present invention;

FIG. 4 is a graph diagram illustrating the situation when there is a minor shortage of charging energy to meet the preset charging profile and how this problem is resolved by the proposed control algorithm in accordance with some embodiments of the present invention;

FIG. 5 is a graph diagram illustrating the situation when there is a major shortage of charging energy to meet the preset charging profile and how this problem is resolved by the proposed control algorithm in accordance with some embodiments of the present invention;

FIG. 6 is a graph diagram illustrating the situation when the insufficient power supply happens in a charging frame and how this situation is remedied by the proposed control algorithm in accordance with some embodiments of the present invention;

FIG. 7 is a flow chart of the proposed charging energy control algorithm in accordance with some embodiments of the present invention; and

FIG. 8 is a flow chart of a subroutine of the proposed charging energy control algorithm in accordance with some embodiments of the present invention.

## DETAILED DESCRIPTION OF THE INVENTION

The following detailed description is merely exemplary in nature and is not intended to limit the disclosure or its application and/or uses. It should be appreciated that a vast number of variations exist. The detailed description will enable those of ordinary skilled in the art to implement an exemplary embodiment of the present disclosure without undue experimentation, and it is understood that various changes or modifications may be made in the function and structure described in the exemplary embodiment without departing from the scope of the present disclosure as set forth in the appended claims.

The benefits, advantages, solutions to problems, and any element(s) that may cause any benefit, advantage, or solution to occur or become more pronounced are not to be construed as a critical, required, or essential features or elements of any or all of the claims. The invention is defined solely by the appended claims including any amendments made during the pendency of this application and all equivalents of those claims as issued.

The use of the terms "a" and "an" and "the", and "at least one" and similar referents in the context of describing the invention (especially in the context of the following claims) are to be construed to cover both the singular and the plural, unless otherwise indicated herein or clearly contradicted by context. The terms "comprising," "having", "including", and "containing" are to be construed as open-ended terms (i.e., meaning "including, but not limited to") unless otherwise noted. The use of any and all examples, or exemplary language (e.g., "such as") provided herein, is intended merely to illuminate the invention better and does not pose a limitation on the scope of the invention unless the claims expressly state otherwise. Recitation of ranges of values herein is merely intended to serve as a shorthand method of referring individually to each separate value falling within the range, unless otherwise indicated herein, and each separate value is incorporated into the specification as if it were individually recited herein. No language in the specification should be construed as indicating any non-claimed element as essential to the practice of the invention.

As used herein, the term "electric vehicle", or the abbreviation "EV", refers to any vehicle that is partly (e.g.: hybrid vehicle) or entirely operated based on stored electric power. Such vehicles can include, for example, road vehicles (cars, motorcycles, trucks, etc.), rail vehicles, and underwater vessels.

Unless defined otherwise, all technical and scientific terms used herein in the specification shall have the same meaning as commonly understood by one of ordinary skill in the art to which the present invention belongs.

In light of the background, the present invention is disclosed to provide a charging system having a precision-time energy-based control algorithm for dynamically regulating an output power of the EV chargers for charging the EVs.

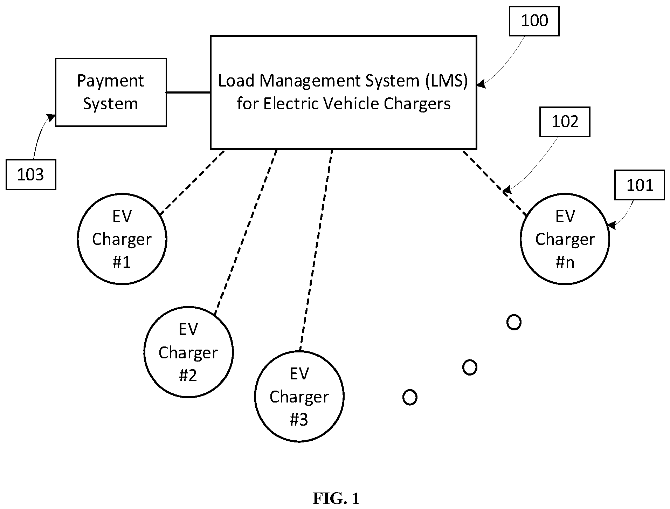

FIG. 1 is a charging system in accordance with some embodiments of the present invention, comprising of a load management system (LMS) 100, one or more EV chargers 101, a network system 102 comprising one or more wired or wireless connections for linking the one or more EV chargers 101 to the LMS 100, and a payment system 103. The payment system 103 can be a discrete system or a system integrated with the LMS 100 to charge the user for the EV charging service based on the charging time and energy. The EV charger 101 may be a single-phase alternating current (AC) charger or a 3-phase AC charger. The EV charger 101 is not restricted to any charging standards.

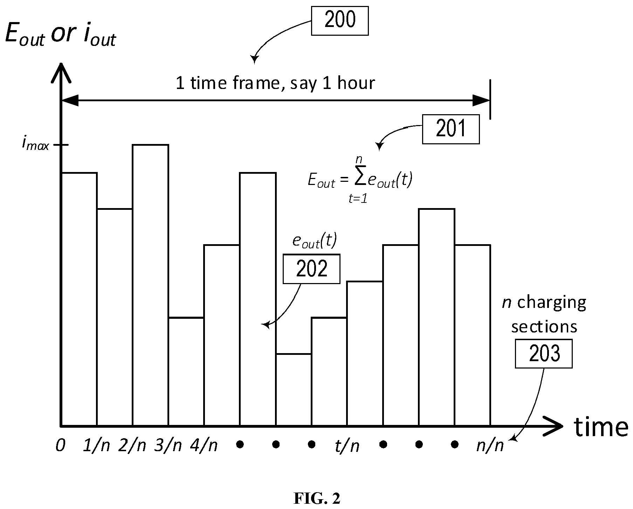

FIG. 2 is a basic charging energy control algorithm in accordance with some embodiments of the present invention. The charging process comprises one or more charging frames 200, wherein each charging frame 200 is divided into n sections 203. In certain embodiments, the charging frame 200 is defined as a 1-hour period. The total charging energy 201, as illustrated in Eq. 1, within the charging frame 200 is a summation of the energy within every charging section 202, as illustrated in Eq. 2. The total charging energy is defined by the charger operator, usually as kWh per hour.

$$E_{out} = \sum_{t=1}^{n} e_{out}(t) \qquad (\text{Eq. 1})$$

$$e_{out}(t) = v_{out}(t) \times i_{out}(t) \times \frac{1}{n} \qquad (\text{Eq. 2})$$

where

$E_{out}$ = charging energy within a charging frame, say hourly charging energy
$v_{out}(t)$ = charging voltage (assumed that the charging voltage is constant over the charging frame)
$i_{out}(t)$ = charging current
$n$ = number of sections within one charging frame

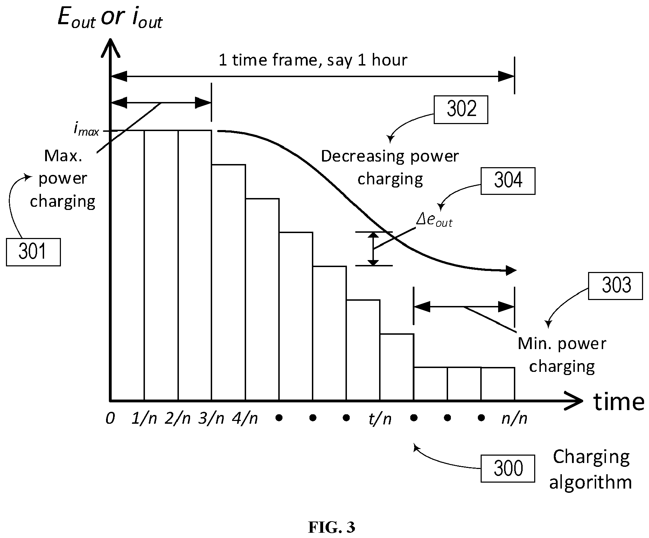

FIG. 3 is the fundamental charging algorithm 300, which divides the charging process within a charging frame into three stages, namely a maximum power charging stage 301, a decreasing power charging stage 302, and a minimum power charging stage 303. Each stage will further be divided into several sections. The first stage is the maximum power charging stage 301 where the output current limit will be set to a maximum value. In certain embodiments, the maximum output current is 32A as stipulated in IEC 61851 for AC chargers. The second stage is the decreasing power charging stage 302 where the charging current will be reduced gradually from the maximum limit to its minimum limit. The last stage is the minimum power charging stage 303 where the charger will only deliver a minimum current to the EV. In certain embodiments, the minimum current is 6A as stipulated in IEC 61851. With the limit of charging energy per each charging frame set by the operator, the LMS 100 is configured to calculate a step change in output energy, i.e. $\Delta e_{out}$ 304, and the current limit will be reduced by $\Delta e_{out} \div v_{out}$ each section during the decreasing power charging stage. The total accumulated energy is, therefore, equal to the operator's defined total charging energy.

The general situation when the total electricity supply is more than the total electricity demand is shown in FIG 3. In certain cases, the total electricity supply is insufficient to meet the electricity demand, and there is a shortage of electricity supply. The situation will be more complicated. There are two scenarios of energy shortage, namely a minor shortage of electricity supply and a major shortage of electricity supply.

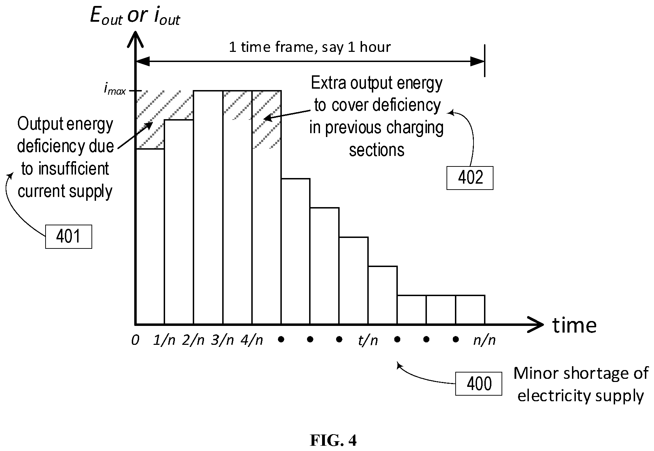

FIG. 4 is the situation when there is a minor shortage of electricity supply 400, and the output energy is less than the preset value. In this case, the LMS 100 is configured to increase the charging energy in the subsequent sections of the charging process in order to compensate for the difference as a result of the energy shortage in the previous sections. However, if the output energy deficiency 401 happens in some sections, and there is a sufficient electricity supply in the subsequent sections, then the LMS 100 is configured to boost the charging power to a maximum limit, and this extra output energy 402 covers the energy shortage as soon as possible, so as to regulate the charging for the remaining sections to meet the preset charging profile.

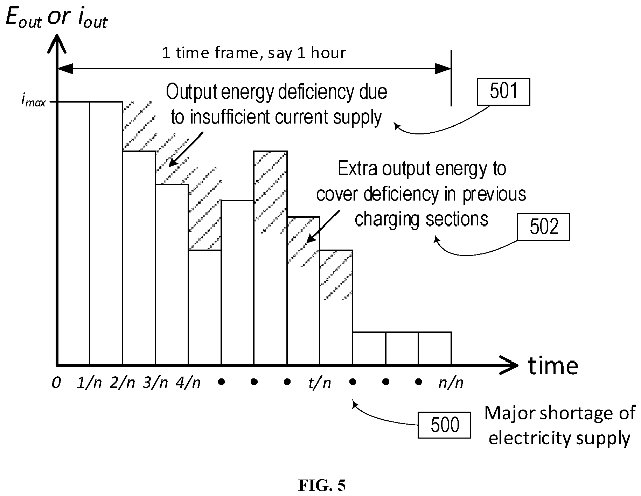

FIG. 5 shows another situation when the shortage of electricity supply 500 is substantial and lasts for several sections in the charging process. The output energy deficiency happens in several successive sections, and a large shortage of charging energy 501 is accumulated. In this case, there is not enough electricity supply for the LMS 100 to boost the charging power to a maximum, then the LMS 100 is configured to keep increasing the current limit to whatever is allowed. This compensation of charging energy continues for some sections, and an extra energy 502 is enough to cover the energy shortage in the previous sections. After that, the LMS 100 is configured to regulate the charging for the remaining sections to meet the preset charging profile.

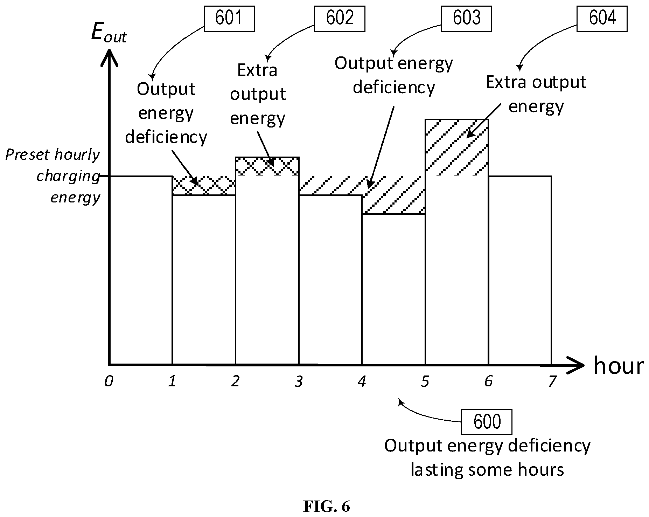

FIG. 6 illustrates the situation when the shortage of electricity supply 600 lasts for a prolonged period, such as a few hours. If the shortage 601 is small, then the LMS 100 is configured to add extra output energy 602 on top of the preset charging energy so as to compensate for the output energy deficiency in the next charging frame. However, if the shortage 603 is accumulated to a significant amount, then the LMS 100 is configured to increase the limit of charging energy by the total shortage of energy. This process will continue in the following sections until the preset output energy is achieved.

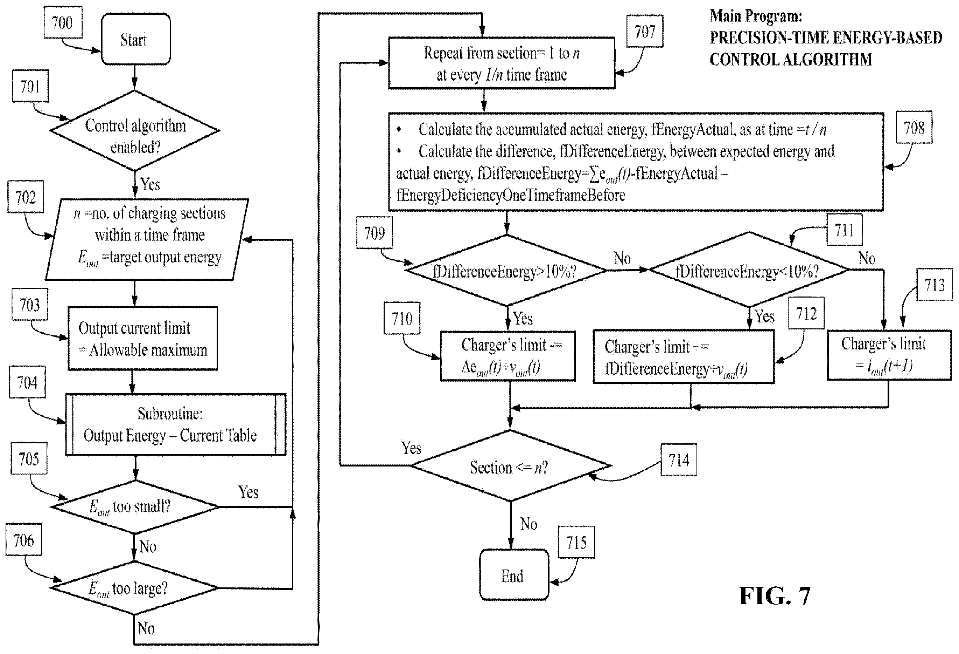

FIG. 7 is a flow chart of the charging algorithm in accordance with some embodiments of the present invention. The main program of the precision-time energy-based control algorithm 700 may form part of the LMS 100, which can be enabled 701 by the operator. In an alternative embodiment, the precision-time energy-based control algorithm 700 may be performed by one or more separated local processors, cloud computing platforms, power management infrastructures, or any combination thereof. The precision-time energy-based control algorithm 700 comprises collecting EV chargers' data, including voltage, current, number of phases, charging time, and charging energy; and controlling the output power of the EV charger to a predetermined value at a predetermined time.

Once the precision-time energy-based control algorithm 700 is enabled, the LMS 100 is configured to manipulate the charging process every one-$n^{th}$ of the charging frame 702, and the preset charging energy is defined as $E_{out}$. In order to release the current control ability for the LMS 100, the output limit is set to a maximum 703, say 32A as stipulated in IEC 61851. Then the main program is configured to follow a subroutine 704 to derivate a function of time, an expected accumulated output energy, an output current limit, and a charging current of the next section; which generates a look-up table for storing the function of time, the expected accumulated output energy, and the output current limit, and the charging current of the next section or all sections in the charging process. Besides, the subroutine 704 is further configured to determine whether the preset output energy is being too small 705 or too large 706 to achieve.

Once the initialization of the main program is completed, the LMS 100 is configured to perform the calculation of energy consumption 708. The LMS 100 first calculates the accumulated actual charging energy at time = $t/n$, then determines the difference between the expected and actual output energy, and subtracts any shortage of energy in the previous charging frame. A predefined tolerance level is allowed for the frustration of charging current. In one embodiment, the predefined tolerance level is 10%. If the difference of output energy is more than the predefined tolerance level 709, the charging current limit will be reduced by $\Delta e_{out}(t) \div v_{out}(t)$ 710. If the difference is less than the predefined tolerance level 711, the limit will be increased by (difference of output energy) $\div v_{out}(t)$ to recover the shortage of energy in 1/n charging frame. This increment of charging current is the maximum allowable limit for the charger to regain the shortage of energy in the next section. When the difference is within $\pm 10\%$, it is assumed that the charging process is in keeping with the proposed charging profile, and the limit is set to the value of the next section, i.e. $i_{out}(t+1)$ 713. The process repeats $n$ times 707, 714, and ends 715.

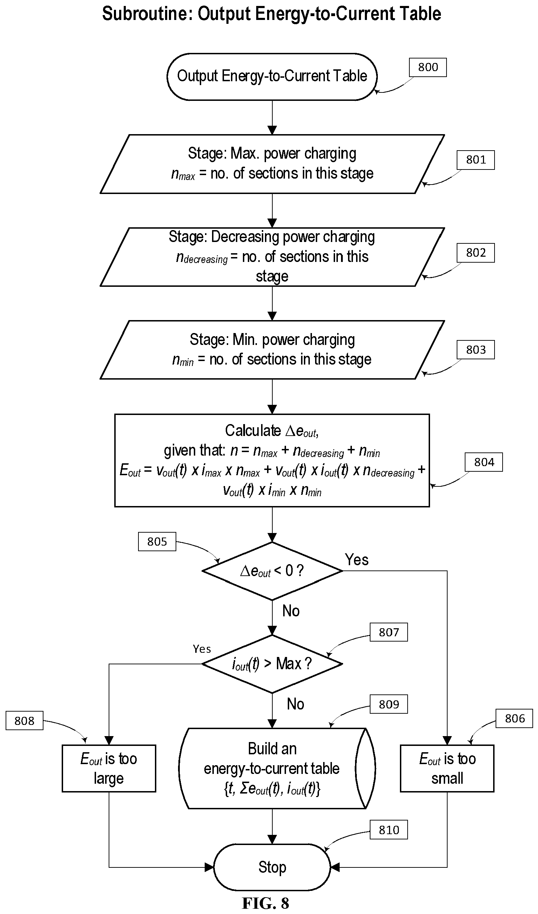

FIG. 8 is a flow chart of a subroutine of the main program in accordance with some embodiments of the present invention. The subroutine 800 divides the charging process into three stages 301, 302, and 303. The first stage of maximum power charging stage 301 is divided into $n_{max}$ sections 801, and the second stage of decreasing power charging stage 302 is divided into $n_{descreasing}$ sections 802, and the last stage of minimum power charging stage 303 is also divided into $n_{min}$ sections 803. The total number of sections $n$ 203 is the sum of $n_{max}$, $n_{descreasing}$ and $n_{min}$. Then, the subroutine will derivate a function of $t$, $\Sigma e_{out}(t)$ and $i_{out}(t)$, and calculate a constant $\Delta e_{out}$ and a list of $i_{out}(t)$ 804, if $\Delta e_{out}$ is less than zero, this means the preset charging energy $E_{out}$ is too small to achieve. On the contrary, if $i_{out}(t)$ is larger than the maximum current limit, this implies the $E_{out}$ is too large to reach. Once the $\Delta e_{out}$ and $i_{out}(t)$ are achievable, then the subroutine 800 generates an energy-to-current table 809, and stops 810.

This illustrates the charging system having a precision-time energy-based control algorithm for regulating the output power of the charger. It will be apparent that variants of the above-disclosed and other features and functions, or alternatives thereof, may be combined into many other different systems or apparatuses. The present embodiment is, therefore, to be considered in all respects as illustrative and not restrictive. The scope of the disclosure is indicated by the appended claims rather than by the preceding description, and all changes that come within the meaning and range of equivalency of the claims are therefore intended to be embraced therein.

**Claims**

1. A charging system for executing a charging process during a charging frame, comprising:

   one or more electric vehicles (EV) chargers;
   a load management system (LMS) capable of controlling the one or more EV chargers;
   a network system comprising one or more wired or wireless connections for linking the one or more EV chargers to the load management system; and
   a precision-time energy-based control algorithm for dynamically regulating an output power of the one or more EV chargers to meet a preset charging profile,
   wherein:

   the charging frame is divided into a plurality of sections; and
   the LMS is configured to adjust the output power of each section for compensating an energy shortage in previous sections.

2. The charging system of claim 1, wherein the precision-time energy-based control algorithm comprises:

   collecting EV chargers' data, including voltage, current, number of phases, charging time, and charging energy; and

controlling the output power of the EV charger to a predetermined value at a predetermined time.

3. The charging system of claim 2, wherein the EV charger is a single-phase alternating current (AV) charger or a 3-phase AC charger.

4. The charging system of claim 2, wherein the charging process is divided into a plurality of stages, and wherein each of the plurality of stages is programmable.

5. The charging system of claim 4, wherein each of the plurality of sections is programmable.

6. The charging system of claim 5, wherein the preset charging profile defines the output power at each of the plurality of stages and each of the plurality of sections.

7. The charging system of claim 2, wherein the precision-time energy-based control algorithm derivates a function of time, an accumulated charging energy, an output current limit, and a charging current of the next section.

8. The charging system of claim 7, wherein the precision-time energy-based control algorithm generates a look-up table for storing the function of time, the accumulated charging energy, the output current limit, and the charging current of the next section.

9. The charging system of claim 2, wherein the LMS increases a charging current limit if an accumulated charging energy is less than an expected value as defined by the preset charging profile.

10. The charging system of claim 2, wherein the LMS decreases a charging current limit if an accumulated charging energy is more than an expected value as defined by the preset charging profile.

11. The charging system of claim 9 or 10, wherein the LMS regulates the charging current in order to maintain the charging process in keeping with the preset charging profile within a time frame.

**FIG. 1**

$E_{out}$ or $i_{out}$

200

1 time frame, say 1 hour

201

$i_{max}$

$$E_{out} = \sum_{t=1}^{n} e_{out}(t)$$

$e_{out}(t)$

202

$n$ charging sections

203

0  1/n  2/n  3/n  4/n  •  •  •  t/n  •  •  •  n/n

time

**FIG. 2**

$E_{out}$ or $i_{out}$

1 time frame, say 1 hour

302

$i_{max}$

Max. power charging

301

Decreasing power charging

304

$\Delta e_{out}$

303

Min. power charging

0  1/n  2/n  3/n  4/n  •  •  •  t/n  •  •  •  n/n

time

300

Charging algorithm

**FIG. 3**

$E_{out}$ or $i_{out}$

1 time frame, say 1 hour

$i_{max}$

Extra output energy to cover deficiency in previous charging sections

Output energy deficiency due to insufficient current supply

402

401

time

0  1/n  2/n  3/n  4/n  •  •  •  t/n  •  •  •  n/n

400  Minor shortage of electricity supply

**FIG. 4**

$E_{out}$ or $i_{out}$

1 time frame, say 1 hour

501

$i_{max}$

Output energy deficiency due
to insufficient current supply

Extra output energy to
cover deficiency in previous
charging sections

502

time

0    1/n   2/n   3/n   4/n   •   •   •   t/n   •   •   •   n/n

500    Major shortage of
electricity supply

**FIG. 5**

**FIG. 6**

FIG. 7

# Subroutine: Output Energy-to-Current Table

Output Energy-to-Current Table — 800

Stage: Max. power charging
$n_{max}$ = no. of sections in this stage — 801

Stage: Decreasing power charging
$n_{decreasing}$ = no. of sections in this stage — 802

Stage: Min. power charging
$n_{min}$ = no. of sections in this stage — 803

Calculate $\Delta e_{out}$,
given that: $n = n_{max} + n_{decreasing} + n_{min}$
$E_{out} = v_{out}(t) \times i_{max} \times n_{max} + v_{out}(t) \times i_{out}(t) \times n_{decreasing} + v_{out}(t) \times i_{min} \times n_{min}$ — 804

805 — $\Delta e_{out} < 0$ ?   Yes

No

807 — $i_{out}(t) >$ Max ?

Yes

808 — $E_{out}$ is too large

809 — Build an energy-to-current table $\{t, \Sigma e_{out}(t), i_{out}(t)\}$

No

806 — $E_{out}$ is too small

810 — Stop

**FIG. 8**

Europäisches
Patentamt
European
Patent Office
Office européen
des brevets

# EUROPEAN SEARCH REPORT

Application Number

EP 23 20 5988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/389314 A1 (ZHU ZHENGMAO [US]) 26 December 2019 (2019-12-26) * paragraphs [0031], [0041], [0042], [0063], [0072], [0075], [0082] * * paragraph [0087] – paragraph [0091] * * paragraphs [0117], [0123], [0133] * * paragraph [0192] – paragraph [0199] * * paragraph [0203] * * figures 1, 2A, 2B * ----- | 1,2,4-11 | INV. B60L53/63 B60L53/68 |
| X | US 2019/344680 A1 (BEAUDE OLIVIER [FR] ET AL) 14 November 2019 (2019-11-14) * paragraph [0047] – paragraph [0059] * * paragraph [0090] * * figures 1, 2, 3(A), 3(B), 3(C), 3(D) * ----- | 1-8 | |

TECHNICAL FIELDS
SEARCHED      (IPC)

B60L

The present search report has been drawn up for all claims

| Place of search | Date of completion of the search | Examiner |
|---|---|---|
| The Hague | 21 February 2024 | Lutz, Tobias |

EPO FORM 1503 03.82 (P04C01)

## ANNEX TO THE EUROPEAN SEARCH REPORT
## ON EUROPEAN PATENT APPLICATION NO.

EP 23 20 5988

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2024

| Patent document cited in search report | | Publication date | Patent family member(s) | | | Publication date |
|---|---|---|---|---|---|---|
| US 2019389314 | A1 | 26-12-2019 | NONE | | | |
| US 2019344680 | A1 | 14-11-2019 | CN | 110312637 | A | 08-10-2019 |
| | | | EP | 3554888 | A1 | 23-10-2019 |
| | | | FR | 3060888 | A1 | 22-06-2018 |
| | | | US | 2019344680 | A1 | 14-11-2019 |
| | | | WO | 2018114842 | A1 | 28-06-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 32022062744